# EUROPÄISCHE PATENTSCHRIFT

(11) **EP 1 107 891 B1**
(45) Veröffentlichungstag und Bekanntmachung des Hinweises auf die Patenterteilung: **03.08.2005**
(21) Anmeldenummer: 99944545.5
(22) Anmeldetag: 28.08.1999
(51) Int. Cl.: B60S 9/02

(54) **STÜTZFUSS**
SUPPORT FOOT
PIED D'APPUI

(30) Priorität: 28.08.1998 DE 19839360
(43) Veröffentlichungstag der Anmeldung: 20.06.2001
(73) Patentinhaber: Jost-Werke GmbH & Co. KG, 60528 Frankfurt am Main (DE)
(72) Erfinder: ALGÜERA GALLEGO, José Manuel, D-63739 Aschaffenburg (DE); MÜLLER, Gerald, D-63179 Obertshausen (DE); PFISTER, Steffen, D-63225 Langen (DE)
(74) Vertreter: Fuchs Mehler Weiss & Fritzsche
(86) Internationale Anmeldenummer: PCT/EP1999/006337
(87) Internationale Veröffentlichungsnummer: WO 2000/012363

(56) Entgegenhaltungen:
- EP-A- 0 322 634
- EP-A- 0 430 643
- US-A- 3 666 290
- US-A- 4 039 206
- US-A- 4 176 825

## Beschreibung

Die Erfindung betrifft einen Stützfuß für Stützvorrichtungen für Sattelauflieger mit einer Fußplatte, einem auf der Fußplatte angeordneten Dämpfungselement und mit einer Halterung mit zwei Löchern zur Aufnahme mindestens eines Lagerelements zur schwenkbaren Befestigung an einer Fußaufnahmeeinrichtung der Stützvorrichtung. Ein derartiger Stützfuß ist beispielsweise aus der EP-A-0430 643 bekannt geworden.

Stützvorrichtungen sind an der Unterseite von Sattelaufliegern in deren vorderen Bereichen in der Regel paarweise angeordnet und kommen immer dann zum Einsatz, wenn der Sattelauflieger von seiner Zugmaschine getrennt und für sich abgestellt wird. Bei luftgefederten Sattelaufliegern ist es aber bekannt, daß nach einer mehr oder weniger langen Standzeit Luft aus den Federn entweicht, was zur Folge hat, daß der Heckbereich des Sattelanhängers absackt, so daß dieser eine schräge bzw. nach hinten geneigte Stellung in bezug auf den Boden einnimmt. Zu diesem Zweck müssen die Stützfüße bzw. deren Fußplatten schwenkbar angeordnet sein, um diese Schräglage auszugleichen. Das gleiche gilt auch, wenn der Sattelauflieger auf unebenem Gelände abgestellt wird. Zusätzlich zur Schwenkbarkeit des Fußes bzw. der Fußplatte ist es wünschenswert, daß beim Ausfahren der Stützvorrichtungen die beweglichen Teile der Stützvorrichtung sanft auf dem Boden aufsetzen, um Beschädigungen zu vermeiden. Hierzu sind in den Stützfüßen entsprechende Dämpfungselemente vorgesehen.

Da es sehr schwierig ist, all diesen Randbedingungen mit nur einer Fußausführung gerecht zu werden, werden in der Regel je nach Einsatzbedingung unterschiedliche Fußvarianten verwendet.

Die benötigte Fußausführung muß im Regelfall vor dem Kauf der Stützwinde festgelegt werden, da der Fuß Bestandteil davon ist und dementsprechend darauf zu montieren ist.

Die unterschiedliche Ausführung des Fußes bedingt meist auch unterschiedliche Vorkehrungen und Vorbearbeitungsstufen an der Stützwinde selbst. Dadurch entsteht für jeden Fußtyp eine jeweils spezifische Stützwindenausführung.

Der Vorteil dabei ist, daß dadurch Fuß und Stützwinde optimal aufeinander abgestimmt werden können.

Es ergeben sich aber auch große Nachteile.

So müssen im Fertigungsprozeß der Stützwinde sehr viele für jeden Fußtyp unterschiedliche Arbeiten durchgeführt werden, mit entsprechendem Aufwand für Werkzeuge, Vorrichtungen, Bevorratung von Material, Platzbedarf und Logistik.

Zudem hat der Endverbraucher oder der Zwischenhändler nach der Herstellung der Stützwinde im Regelfall nicht mehr die Möglichkeit, unterschiedliche Fußtypen gegeneinander auszutauschen.

Es ist daher sinnvoll, Fußtypen zu entwickeln, die möglichst vielseitig sind und demnach eine große Bandbreite in ihren Anwendungen haben.

Zum heutigen Stand der Technik gehört eine Fußausführung, die im folgenden Tellerfuß genannt wird. Dieser Fuß ist ein starres Gebilde, das über eine tellerförmige Aufstandsfläche verfügt und um eine Achse, die im Innenrohr der Stützwinde horizontal und quer zur Fahrtrichtung gelagert ist, schwenken kann. Der Fuß kann sich somit gewissen Neigungen der Fahrbahn, z.B. Auffahrrampen, Steigungen u.ä. anpassen und somit das Abstellen des Aufliegers ermöglichen.

Durch die an sich steife Ausführung des Fußes werden jedoch Stoßbelastungen, wie sie beispielsweise beim Rangieren der Auflieger auftreten, direkt auf die Stützwinde und mittelbar auch auf das Fahrzeug übertragen. Dies kann auf Dauer zu Funktionsstörungen oder sogar Beschädigungen an beiden führen.

Um solche Beschädigungen zu reduzieren oder gar zu vermeiden, gibt es Fußtypen, die über elastische Elemente verfügen, die die kinematische Energie des Stoßes aufnehmen und somit die mechanischen Bauteile schützen sollen.

Aus der DE-OS 31 19 359 ist eine Stützvorrichtung bekannt, bei der am unteren Ende des ausfahrbaren Stützenteils eine dieses Stützenteil seitlich überragende Bodenplatte vorgesehen ist, wobei zwischen dieser Bodenplatte und der Fußplatte ein elastischer Druckkörper aus Gummi angeordnet ist. Ein an der Fußplatte angeschweißter Haltering übergreift mit einem oberen Randabschnitt den seitlich abstehenden ringförmigen Teil der Bodenplatte, wobei zwischen dem Haltering und dem ausfahrbaren Stützenteil ein gewisses Spiel vorhanden ist. Der Schwenkwinkel und Federweg der Fußplatte wird hier durch die Zusammendrückbarkeit des elastischen Druckkörpers und dem Abstand zwischen dem Haltering und dem ausfahrbaren Stützenteil begrenzt. Diese Konstruktion ermöglicht nur eine begrenzte Anpassung der Fußplatte an größere Bodenunebenheiten.

Es ist Aufgabe der Erfindung, einen Stützfuß der eingangs genannten Art zu schaffen, der also schwenkbar mit der Stützvorrichtung verbunden und über ein Dämpfungselement an dieser abgestützt ist und bei ausreichender Dämpfung und Schwenkbarkeit leicht an unterschiedliche Stützvorrichtungen anpaßbar ist.

Zur Lösung dieser Aufgabe ist vorgesehen, daß die Halterung auf dem Dämpfungselement aufliegt oder auf diesem befestigt ist, wobei die Halterung von einem auf der Fußplatte befestigten, die Halterung übergreifenden Bügel gehalten wird.

Im unbelasteten Zustand hängt die Fußplatte am Bügel an der Halterung, wobei das Dämpfungselement nicht komprimiert ist. Die Halterung befindet sich zwischen dem Dämpfungselement und diesem Bügel. Beim Auftreffen des Stützfußes auf dem Boden löst sich die Halterung von dem Bügel und komprimiert das Dämpfungselement. Die Halterung braucht im Bereich des Dämpfungselementes nicht schwenkbar zu sein, weil die schwenkbare Lagerung der Halterung an der Fußaufnahmeeinrichtung der Stützvorrichtung vorgesehen ist.

Vorzugsweise ist die Halterung ein U-förmiges Bauteil mit zwei senkrecht nach oben weisenden Schenkeln, wobei die beiden Schenkel die beiden Löcher zur Aufnahme des Lagerelements für die Schwenklagerung aufweisen. Schwenklagerung und Dämpfungselement sind übereinander angeordnet und vollständig entkoppelt, so daß sich die beiden Bewegungen nicht gegenseitig beeinflussen bzw. behindern.

Vorzugsweise sind auf der Fußplatte unterhalb der Halterung zwei Anschlagelemente zur Bewegungsbegrenzung der Halterung befestigt. Diese Anschlagelemente sind von Vorteil, um das Dämpfungselement vor übermäßigen Belastungen zu schützen.

Eine beispielhafte Ausführungsform der Erfindung wird nachfolgend anhand der Zeichnungen erläutert.

Es zeigen:
Fig. 1 einen Stützfuß im Vertikalschnitt der Ausführungsform,
Fig. 2 den in Fig. 1 gezeigten Stützfuß in Seitenansicht.

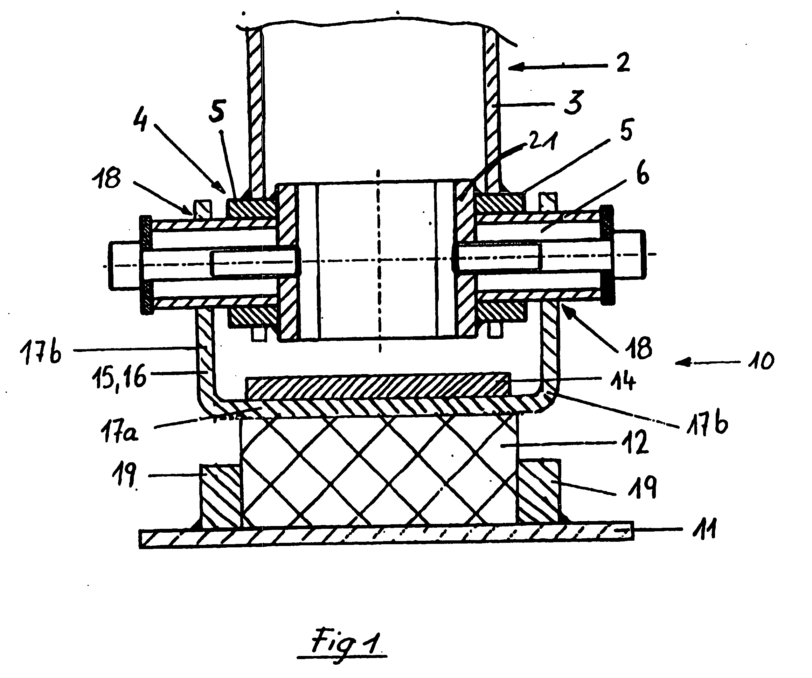

In der Fig. 1 ist das untere Ende einer Stützvorrichtung 2 dargestellt. An der Innenhülse 3 ist am unteren Ende eine Fußaufnahmeeinrichtung 4 mit einem rohrförmigen, vertikal ausgerichteten Zentralkörper 21, an dem seitlich gegenüberliegend horizontal ausgerichtete Buchsen 5 und darin befestigten Lagerelementen in Form von Lagerrohrabschnitten 6 angeordnet sind. An diesen Lagerrohrabschnitten 6 ist schwenkbar ein U-förmiges Bauteil 16 angeordnet, das die Halterung 15 für den Stützfuß 10 bildet.

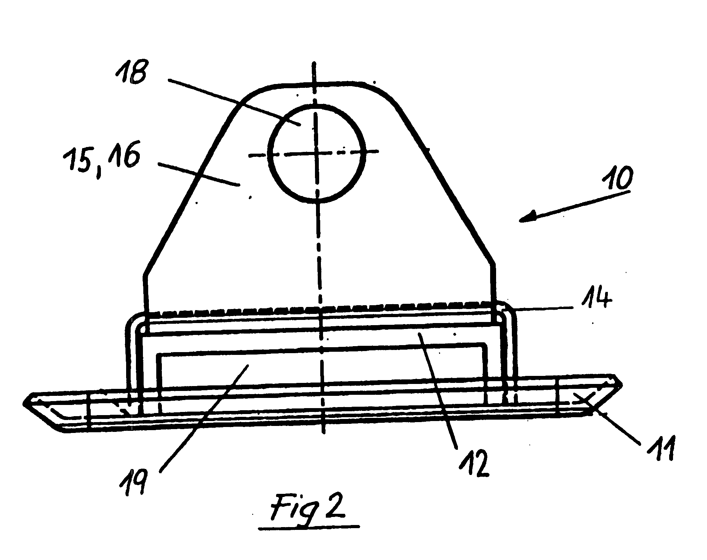

Das U-förmige Bauteil 16 weist ein horizontal angeordnetes Mittelteil 17a und zwei senkrecht aufragende Schenkel 17b auf. In den Schenkeln 17b sind Löcher 18 zum Durchgreifen der Lagerrohrabschnitte 6 angeordnet. Die Halterung 15 liegt auf dem Dämpfungselement 12 auf und wird von einem Bügel 14 übergriffen, der, wie aus der Fig. 2 zu entnehmen ist, auf der Oberseite der Fußplatte 11 befestigt ist.

Beim Aufsetzen des Stützfußes 10 bewegt sich die Halterung 15 nach unten und komprimiert hierbei das Dämpfungselement 12. Das Mittelteil 17a löst sich hierbei vom Bügel 14. Als Bewegungsbegrenzung sind seitlich des Dämpfungselementes 12 auf der Fußplatte 11 zwei Anschlagelemente 19 angeordnet, auf denen sich die Halterung 15 bei extremer Belastung abstützt. Die Vertikalbewegung wird durch das Dämpfungselement 12 gewährleistet und unabhängig davon wird die Schwenkbarkeit durch die Ausgestaltung des U-förmigen Bauteils in Verbindung mit der Fußaufnahmeeinrichtung 4 sichergestellt.

### Bezugszeichen

- 2: Stützvorrichtung
- 3: Innenhülse
- 4: Fußaufnahmeeinrichtung
- 5: Buchse
- 6: Lagerrohrabschnitt, Lagerelement
- 10: Stützfuß
- 11: Fußplatte
- 12: Dämpfungselement
- 13: Verbindungsplatte
- 14: Bügel
- 15: Halterung
- 16: U-förmiges Bauteil
- 17a: Mittelteil
- 17b: Schenkel
- 18: Loch
- 19: Anschlagelement
- 21: rohrförmiger Zentralkörper

## Patentansprüche

1. Stützfuß (10) für Stützvorrichtungen (2) für Sattelauflieger mit einer Fußplatte (11), einem auf der Fußplatte angeordneten Dämpfungselement (12) und mit einer Halterung (15) mit zwei Löchern (18) zur Aufnahme mindestens eines Lagerelements (6) zur schwenkbaren Befestigung an einer Fußaufnahmeeinrichtung (4) der Stützvorrichtung (2), **dadurch gekennzeichnet,**
**daß** die Halterung (15) auf dem Dämpfungselement (12) aufliegt oder auf diesem befestigt ist, und daß die Halterung (15) von einem auf der Fußplatte (11) befestigten, die Halterung (15) übergreifenden Bügel (14) gehalten ist.

2. Stützfuß nach Anspruch 1, **dadurch gekennzeichnet, daß** die Halterung (15) ein U-förmiges Bauteil (16) mit zwei senkrecht nach oben weisenden Schenkeln (17b) ist, und
daß die beiden Schenkel (17b) die beiden Löcher (18) zur Aufnahme des Lagerelements (6) aufweisen.

3. Stützfuß nach Anspruch 1 oder 2, **dadurch gekennzeichnet, daß** auf der Fußplatte (11) unterhalb der Halterung (15) zwei Anschlagelemente (19) zur Bewegungsbegrenzung der Halterung (15) befestigt sind.

## Claims

1. Support foot (10) for support devices (2) for semitrailers with a foot plate (11), a damping element (12) arranged on the foot plate and with a holding device (15) with two holes (18) for receiving at least one bearing element (6) for pivotable fastening to a foot-receiving arrangement (4) of the support device (2), **characterized in that** the holding device (15) lies on the damping element (12) or is fastened on it, and **in that** the holding device (15) is held by a bracket (14) which is fastened on the foot plate (11) and overlaps the holding device (15).

2. Support foot according to Claim 1, **characterized in that** the holding device (15) is a U-shaped component (16) with two legs (17b) pointing vertically upwards, and **in that** the two legs (17b) comprise the two holes (18) for receiving the bearing element (6).

3. Support foot according to Claim 1 or 2, **characterized in that** two stop elements (19) for limiting the movement of the holding device (15) are fastened on the foot plate (11) below the holding device (15).

## Revendications

1. Pied d'appui (10) pour dispositifs d'appui (2) de semi-remorques, comprenant une plaque de base (11), un élément d'amortissement (12) disposé sur la plaque de base et une fixation (15) avec deux trous (18) destinés à recevoir au moins un élément de palier (6) pour la fixation pivotante à un dispositif de réception de pied (4) du dispositif d'appui (2), **caractérisé en ce que**
la fixation (15) repose sur l'élément d'amortissement (12) ou est fixée sur celui-ci, et **en ce que** la fixation (15) est maintenue par un étrier (14) fixé sur la plaque de base (11) et venant en prise par le dessus avec la fixation (15).

2. Pied d'appui selon la revendication 1, **caractérisé en ce que** la fixation (15) est un composant en forme de U (16) avec deux branches (17b) tournées verticalement vers le haut, et
**en ce que** les deux branches (17b) présentent les deux trous (18) destinés à recevoir l'élément de palier (6).

3. Pied d'appui selon la revendication 1 ou 2, **caractérisé en ce que** deux éléments de butée (19) sont fixés sur la plaque de base (11) en dessous de la fixation (15) pour limiter le mouvement de la fixation (15).
